# EUROPÄISCHE PATENTSCHRIFT

(11) **EP 1 355 094 B1**
(45) Veröffentlichungstag und Bekanntmachung des Hinweises auf die Patenterteilung: **26.10.2005**
(21) Anmeldenummer: 02008893.6
(22) Anmeldetag: 20.04.2002
(51) Int. Cl.: F16K 3/08, F16K 11/074, F16K 27/04

(54) **Steuerpatrone zur Regelung des Wasserstroms an einem Wasserauslauf einer Armatur**
Control cartridge to regulate the water flow of the outlet of a sanitary fitting
Cartouche de réglage pour régler l'écoulement d'eau de sortie d'une installation sanitaire

(43) Veröffentlichungstag der Anmeldung: 22.10.2003
(73) Patentinhaber: KWC AG, CH-5726 Unterkulm (CH)
(72) Erfinder: Graber, Heinz, 5727 Oberkulm (CH)
(74) Vertreter: Schaad, Balass, Menzl & Partner AG

(56) Entgegenhaltungen:
- EP-A- 0 453 287
- DE-A- 3 935 460
- DE-B- 1 153 581
- FR-A- 2 525 319
- US-A- 4 554 948

## Beschreibung

Die Erfindung betrifft eine Armatur gemäss dem Oberbegriff des Anspruchs 1, sowie eine Steuerpatrone gemäss dem Oberbegriff des Anspruchs 7.

Bei manchen Armaturen, insbesondere solchen mit zwei unabhängig voneinander benutzbaren Wasserausläufen, ist es notwendig, den Wasserfluss direkt durch ein am Wasserauslauf angeordnetes Ventil zu regeln. Derartige Armaturen haben einen einstückigen Wasserauslauf. Das Ventil befindet sich am Ende des Wasserauslaufs. Da das Ventil aufgrund seiner vorgegebenen Axialabmessung nur in einem zylindrischförmigen Abschnitt des Wasserauslaufs angebracht werden kann, muss der Wasserauslauf an seinem Ende einen zylindrischförmigen Abschnitt für die Aufnahme des Ventils aufweisen. Da dieses Ende bei den meisten Armaturen nach unten gerichtet ist, wird eine bestimmte Mindesthöhe des Armaturkörpers definiert, die nicht unterschritten werden darf. Sehr kompakte Armaturen mit einer geringen Bauhöhe können daher aus Platzgründen nicht realisiert werden.

Für derartige Armaturen verwendete Ventile haben üblicherweise zwei mit Durchgangsbohrungen versehene Steuerelemente, die relativ zueinander drehbar und direkt in den Wasserauslauf eingesetzt sind. Eines der beiden Steuerelemente ist drehbar mit einem Betätigungselement verbunden. Durch Drehen des Betätigungselements werden die Bohrungen des drehbaren Steuerelement mit denen des ortsfesten Steuerelements zur Deckung gebracht, so dass sich das Ventil öffnet.

Da die Steuerelemente unmittelbar im Wasserauslauf angeordnet sind, muss der ganze Wasserauslauf ersetzt werden, falls man das Ventil auswechseln möchte.

Die EP-B-0 616 156 beschreibt eine Steuerpatrone mit einem solchen Ventil, die zusätzlich die Funktion übernimmt, warmes und kaltes Wasser zu mischen. Der Steuerpatrone wird dazu warmes und kaltes Wasser getrennt zugeführt, durch die Steuerelemente dosiert und in einer Mischkammer gemischt.

Die EP-A-0 453 287 offenbart eine Armatur mit einer in ein Armaturengehäuse eingebauten Steuerpatrone, bei welcher Keramikscheiben zum Steuern eines Wasserdurchflusses zur Anwendung gelangen.

Die DE-B-1 153 581 offenbart ein Absperr- und Drosselvorrichtung für Flüssigkeitsleitungen mit einem ringförmig ausgebildeten Betätigungselement, welches das Gehäuse der Absperr- und Drosselvorrichtung umschliesst.

Der vorliegenden Erfindung liegt die Aufgabe zugrunde, eine Armatur mit einer Steuerpatrone zur Regelung des Wasserstroms an einem Wasserauslauf zu schaffen, mit welcher die Bauhöhe der Armatur, deren Wasserfluss am Auslauf geregelt werden soll, reduziert werden kann. Des weiteren soll eine Steuerpatrone für eine derartige Armatur bereitgestellt werden.

Diese Aufgabe wird erfindungsgemäss durch eine Armatur mit den Merkmalen von Anspruch 1 und eine Steuerpatrone mit den Merkmalen von Anspruch 7 gelöst. Vorteilhafte Weiterbildungen sind in den abhängigen Ansprüchen dargestellt.

Die erfindungsgemässe Armatur weist einen Wasserauslauf auf, der einen ersten Auslaufteil und einen zweiten Auslaufteil umfasst. Zwischen dem ersten Auslaufteil und dem zweiten Auslaufteil wird die erfindungsgemässe Steuerpatrone angeordnet. Die Bauhöhe kann reduziert werden, da die Steuerpatrone horizontal angeordnet werden kann.

Die erfindungsgemässe Steuerpatrone weist ein mit Durchlassbohrungen versehenes drehbares erstes Steuerelement, ein daran anliegendes ortsfestes ebenfalls mit Durchlassbohrungen versehenes zweites Steuerelement und ein Betätigungselement auf. Das erste und zweite Steuerelement sind in einem Patronengehäuse angeordnet, wobei das Betätigungselement mit dem ersten Steuerelement über eine das Patronengehäuse durchgreifende Verbindung drehfest verbunden ist. Das Patronengehäuse ist im Anwendungsfall mit dem ersten Auslaufteil des Wasserauslaufs fest verbindbar und imstande, den bezüglich des ersten Auslaufteils stromabwärts gelegenen zweiten Auslaufteil zu halten.

Die erfindungsgemässe Steuerpatrone übernimmt sowohl die Regelung des Wasserflusses als auch die Halterung und Verbindung der beiden Auslaufteile. Durch den speziellen Aufbau der Steuerpatrone bildet sie eine feste Einheit in Form einer Patrone, die in den ersten Auslaufteil eingeschraubt wird. Dieser Aufbau wird durch das Patronengehäuse ermöglicht, welches als alleinige Halterung für die Steuerelemente und den Innenring dient und zudem diese Teile zentriert und konzentrisch zueinander hält. Das Patronengehäuse übernimmt des weiteren die Abdichtung der Keramikscheiben und des zweiten Auslaufteils. Somit kann die Steuerpatrone als Einheit vormontiert und dann von vorne in den ersten Auslaufteil eingeschraubt werden. Der zweite Auslaufteil wird dann an der Steuerpatrone befestigt, die vorzugsweise als alleiniger Träger des zweiten Auslaufteils dient und diesen zentriert. Als sehr leicht gestaltet sich demnach auch die allfällig notwendige Auswechslung der Steuerpatrone. Insbesondere kann der zweite Auslaufteil problemlos ausgewechselt werden, um ihn beispielsweise durch einen längeren Auslaufteil oder einen Auslaufteil eines anderen Typs zu ersetzen. Durch die modulare Bauweise der Armatur wird zudem eine hohe Flexibilität für Händler und Kunden erreicht. Ebenso vorteilhaft ist die angenehme Bedienung der Steuerpatrone. Da sich diese nicht am Ende des Wasserauslaufs befindet, wird man beim Öffnen der Steuerpatrone nicht nass. Beim Schliessen der Steuerpatrone tropft das auf den Händen vorhandene Wasser in das Waschbecken und nicht auf den hinteren Absatz bzw. Rand des Waschbecken, wo es Kalk ansetzen könnte.

Einer vorteilhaften Weiterbildung der Erfindung entsprechend übernimmt die Steuerpatrone zusätzlich zur Regulierung des Wasserstroms noch eine Mischfunktion. Dabei werden der Steuerpatrone warmes und kaltes Wasser getrennt zugeführt, durch die Steuerelemente dosiert und in einer Mischkammer gemischt, wie dies zum Beispiel in der EP-B-0 616 156 beschrieben ist. Dadurch kann vorteilhafterweise auf die Mischpatrone im Armaturkörper verzichtet werden.

Beispiele für die Erfindung sind in den Zeichnungen dargestellt und nachfolgend beschrieben. Es zeigen rein schematisch:
- Fig. 1: eine zwischen zwei Auslaufteilen angeordnete Steuerpatrone im Querschnitt;
- Fig. 2: die Steuerpatrone aus Fig. 1 am Wasserauslauf einer Armatur angeordnet im Querschnitt;
- Fig. 3: eine weitere zwischen zwei Auslaufteilen angeordnete Steuerpatrone im Querschnitt mit einem drehbaren Auslaufteil;
- Fig. 4: eine weitere zwischen zwei Auslaufteilen angeordnete Steuerpatrone mit Mischfunktion im Querschnitt.

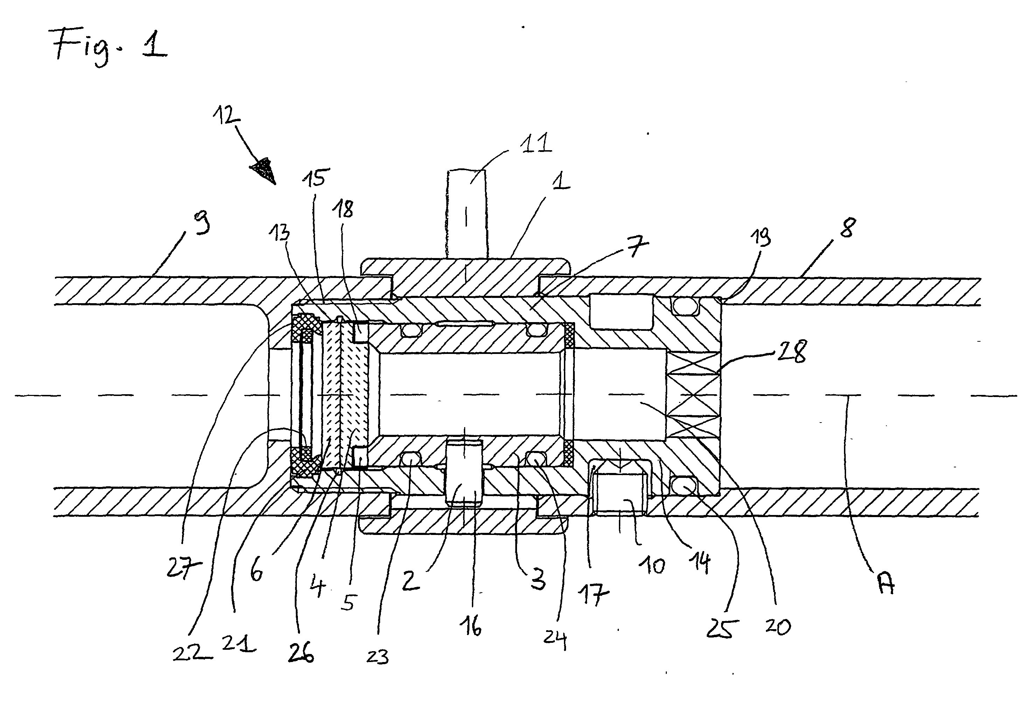

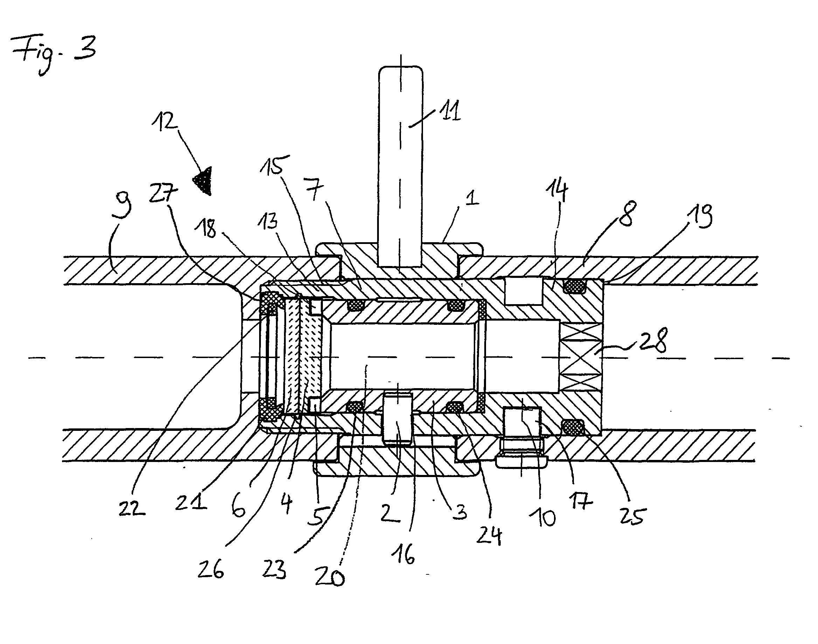

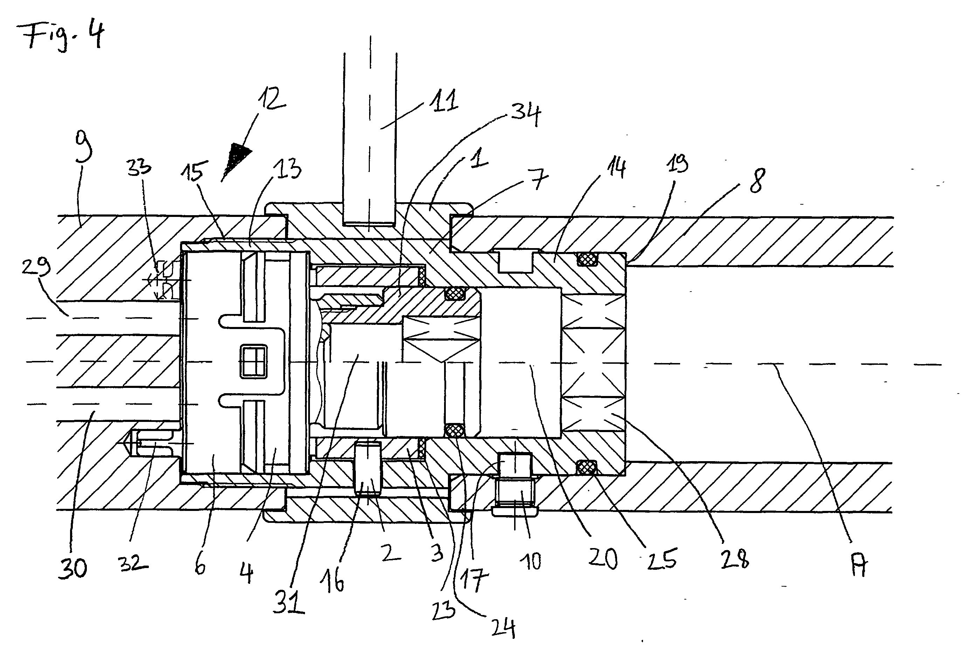

In den Zeichnungen werden drei Ausführungsformen der Steuerpatrone in Fig. 1, Fig. 3 und Fig. 4 dargestellt. Die Steuerpatronen in Fig. 1 und Fig. 3 unterscheiden sich nur in der Art der Befestigung eines zweiten Auslaufteils 8 des Wasserauslaufs 12 an der Steuerpatrone. Die Steuerpatrone in Fig. 4 übernimmt zusätzlich noch eine Mischfunktion.

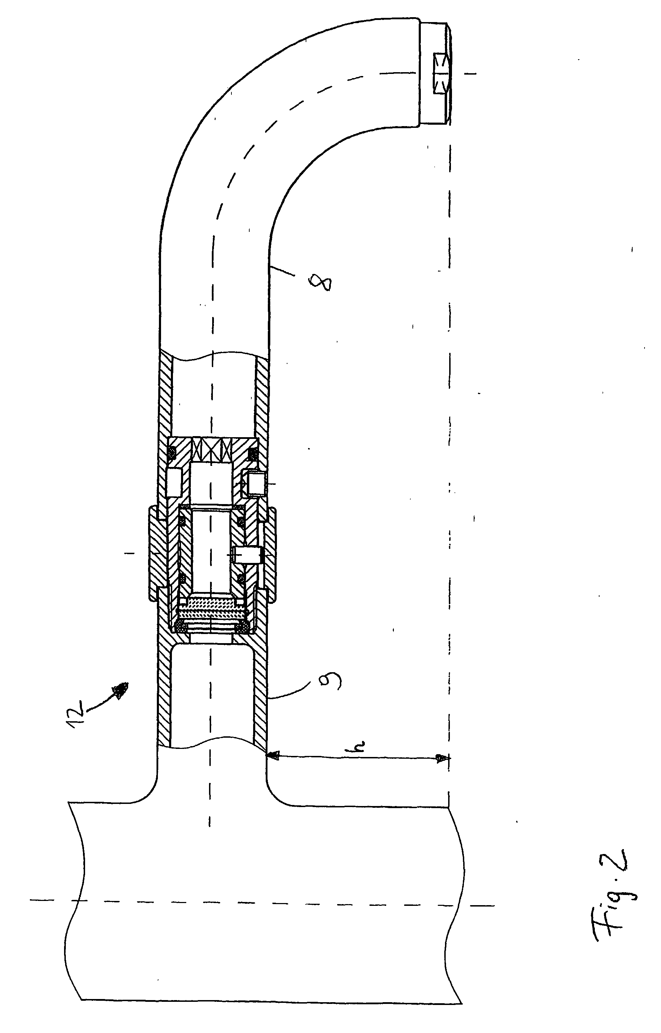

Fig. 1 zeigt die Steuerpatrone im eingebauten Zustand. Die Steuerpatrone umfasst ein im wesentlichen zylindrisches Patronengehäuse 7, welches an einem Endbereich 13 ein Aussengewinde 15 aufweist. Mit diesem ist das Patronengehäuse 7 in den ersten Auslaufteil 9 eingeschraubt. Das Patronengehäuse 7 weist dafür an einem stromabwärts gelegenen Endbereich 14 einen Innensechskant 28 auf, welcher ein Werkzeug drehfest aufnehmen kann, mit dem das Patronengehäuse 7 in den ersten Auslaufteil 9 eingeschraubt wird. Das Ende des Endbereichs 13 des Patronengehäuses 7 liegt an einem ersten Anschlag 27 innerhalb des ersten Auslaufteils 9 an. Da das Patronengehäuse 7 den ersten Auslaufteil 9 überragt, kann wie in Fig. 1 bis 3 gezeigt, der zweite Auslaufteil 8 auf den stromabwärts gelegenen Endbereich 14 des Patronengehäuses 7 aufgesetzt werden. Die Befestigung an der Steuerpatrone erfolgt mittels einer Fixierschraube 10, die in eine Ausnehmung 17 im Endbereich 14 hineinragt. Das rechte Ende des Patronengehäuses 7 liegt an einem zweiten Anschlag 19 des zweiten Auslaufteils 8 an. Dadurch wird erreicht, dass die beiden Auslaufteile voneinander beabstandet sind und der Benutzer auf das dazwischen liegende Betätigungselement Zugriff hat. Der erste Auslaufteil 9 ist, wie in Fig. 2 gezeigt, ein gerades zylindrisches Rohr und der zweite Auslaufteil 8 ein gebogenes zylindrisches Rohr.

Die Steuerpatrone umfasst des weiteren einen um eine Achse A drehbaren Innenring 3, der sich innerhalb des Patronengehäuses 7 befindet. Der Innenring 3 weist Mitnahmenocken 5,18 auf, über welche der Innenring 3 drehfest mit einem mit Durchlassbohrungen versehenen ersten Steuerelement 4 verbunden ist. Anliegend an das erste Steuerelement 4 befindet sich ein mit Durchlassbohrungen versehenes zweites Steuerelement 6. Die Steuerelemente 4,6 sind vorliegend mit Durchlassbohrungen versehene Ventilscheiben, vorzugsweise aus Keramik. Das zweite Steuerelement 6 wird mittels am Endbereich 13 des Patronengehäuses 7 angeordneten Halteelementen 26 ortsfest gehalten. Ebenso denkbar ist es, dass der Innenring 3 und das erste Steuerelement 4 und/oder das Patronengehäuse 7 und das zweite Steuerelement 6 einstückig sind. Um die Steuerpatrone zu öffnen, muss das erste Steuerelement 4 um die Achse A gedreht werden, so dass sich seine Durchlassbohrungen mit denen des ortsfesten zweiten Steuerelements 6 decken. Dies geschieht durch ein am radial äusseren Rand der Steuerpatrone gelegenes ringförmiges Betätigungselement 1, welches hierzu vorzugsweise einen Betätigungsgriff 11 aufweist. Das Betätigungselement 1 ist mit dem Innenring 3 über einen durch eine Öffnung 16 im Patronengehäuse 7 hindurchgreifenden Mitnahmestift 2 drehfest verbunden. Die Öffnung 16 deckt dabei einen bestimmten Winkelbereich um die Achse A ab, sodass das Betätigungselement in diesem Winkelbereich drehbar ist. Wird nun das Betätigungselement 1 mit dem Betätigungsgriff 11 um die Achse A gedreht, so drehen sich ebenfalls der Innenring 3 und das erste Steuerelement 4 um die Achse A.

Im geöffneten Zustand der Steuerpatrone, strömt das Wasser zuerst durch den ersten Auslaufteil 9, dann durch einen innerhalb des Innenrings 3 und des Patronengehäuses 7 gebildeten Kanal 20 und zuletzt durch den zweiten Auslaufteil 8.

Die Abdichtung der wasserführenden Räume erfolgt durch ein am Endbereich 13 angeordnetes Dichtelement 21, vorliegend eine Lippendichtung, welches von einem Dichtungsstützring 22 in radialer Richtung gehalten wird, sowie zwei am Innenring 3 angeordneten Dichtungsringen 23,24 und einem am Endbereich 14 angeordneten Dichtungsring 25.

Fig. 2 zeigt die Steuerpatrone aus Fig. 1 im eingebauten Zustand an einem Wasserauslauf einer Armatur. Wie ersichtlich wird die Mindestbauhöhe der Armatur nur durch die für die Krümmung notwendige Höhe h des zweiten Auslaufteils 8 bestimmt.

Die Steuerpatrone in Fig. 3 unterscheidet sich zu der Steuerpatrone aus Fig. 1 dadurch, dass die Fixierschraube 10 nicht an den Boden der Ausnehmung 17 drückt. Dadurch ist der zweite Auslaufteil 8 um die Achse A drehbar.

In Fig. 4 weist der erste Auslaufteil 9 einen im Anwendungsfall warmes Wasser führenden Warmwasserkanal 29 und einen davon fluiddynamisch getrennten, im Anwendungsfall kaltes Wasser führenden Kaltwasserkanal 30 auf. Diese münden in jeweils eine Durchlassbohrung im zweiten Steuerelement 6. Im stromaufwärts gelegenen Endbereich 13 des Patronengehäuses 7 ist das zweite Steuerelement 6 mittels Nocken 32,33 mit dem ersten Auslaufteil 9 drehfest verbunden. Das erste Steuerelement 4 ist durch Drehen des Betätigungselements 1 um die Achse A drehbar. Die Durchlassbohrungen sind so gestaltet, dass bei Drehung des ersten Steuerelements 4 in Öffnungsrichtung zuerst die Kaltwasserzufuhr über den Kaltwasserkanal 30 bis etwa zum Maximum freigegeben, danach zusätzlich die Warmwasserzufuhr über den Warmwasserkanal 29 freigegeben und anschliessend die Kaltwasserzufuhr wieder gedrosselt wird. Das aus dem Warmwasserkanal 29 und Kaltwasserkanal 30 fliessende Wasser wird in einer stromabwärts von den Steuerelementen 4,6 angeordneten Mischkammer 31 gemischt. Die Mischkammer 31 ist im Patronengehäuse 7 gebildet. Sie wird vorliegend durch eine zusätzliche Hülse 34 begrenzt, kann aber auch direkt durch das Patronengehäuse 7 und/oder den Innenring 3 begrenzt sein. Ebenso möglich ist es, dass anstelle des Warmwasserkanals 29 und des Kaltwasswerkanals 30 im ersten Auslaufteil 9, eine Kaltwasserleitung und eine separate Warmwasserleitung an die Steuerpatrone angeschlossen sind. In diesem Fall weist die Steuerpatrone entsprechende Anschlüsse auf, die mit in der Armatur geführten Leitungen verbindbar sind. Ein Beispiel für die Gestaltung der Steuerelemente 4,6 ist in der EP-B-0 616 156 dargestellt.

## Patentansprüche

1. Armatur mit einem Wasserauslauf (12) und mit einer im Wasserauslauf (12) angeordneten Steuerpatrone, wobei die Steuerpatrone zur Regelung des Wasserstroms ein mit Durchlassbohrungen versehenes, um eine Achse (A) drehbares erstes Steuerelement (4) und ein daran anliegendes, mit Durchlassbohrungen versehenes stationäres zweites Steuerelement (6) aufweist, wobei das erste Steuerelement (4) und das zweite Steuerelemente (6) in einem im Wesentlichen zylindrisehen Patronengehäuse (7) angeordnet sind, und die Steuerpatrone weiter ein ringförmig ausgebildetes und radial ausserhalb des Patronengehäuses (7) angeordnetes Betätigungselement (1) und einen radial innerhalb des Patronengehäuses (7) angeordneten Innenring (3) aufweist, wobei das Betätigungselement (1) über eine das Patronengehäuse (7) durchgreifende Verbindung drehfest mit dem Innenring (7) und der Innenring (7) wiederum drehfest mit dem ersten Steuerelement (4) verbunden ist, wobei
der Wasserauslauf (12) einen ersten Auslaufteil (9) in Form eines zylindrischen Rohres und einen stromabwärts davon angeordneten zweiten Auslaufteil (8) ebenfalls in Form eines zylindrischen Rohres umfasst, **dadurch gekennzeichnet dass** das Patronengehäuse (7) aus einem Stück gefertigt ist, dass das Patronengehäuse (7) mit einem in einem stromaufwärts gelegenen Endbereich (13) angeordneten Aussengewinde (15) in den ersten Auslaufteil (9) eingeschraubt und der zweite Auslaufteil (8) auf einen stromabwärts gelegenen Endbereich (14) des Patronengehäuses aufgesetzt und von diesem gehalten ist und dass der erste Auslaufteil (9) wie auch der zweite Auslaufteil (8) beim Betätigungselement (1) enden.

2. Armatur nach Anspruch 1, **dadurch gekennzeichnet, dass** die Steuerpatrone als alleinige Halterung für den zweiten Auslaufteil (8) dient.

3. Armatur nach Anspruch 1 oder 2, **dadurch gekennzeichnet, dass** der erste Auslaufteil (9) in Form eines cylindrischen Rohres ein geradlinig verlaufendes zylindrisches Rohr und der zweite Auslaufteil (8) in Form eines zylindrischen Rohres ein gebogenes zylindrisches Rohr ist.

4. Armatur nach einem der Ansprüche 1 bis 3, **dadurch gekennzeichnet, dass** der erste Auslaufteil (9) einen Warmwasserkanal (29) und einen davon fluiddynamisch getrennten Kaltwasserkanal (30) umfasst, wobei der Warmwasserkanal (29) und der Kaltwasserkanal (30) in unterschiedliche Durchlassbohrungen des zweiten Steuerelements (6) münden.

5. Armatur nach einem der Ansprüche 1 bis 4, **dadurch gekennzeichnet, dass** das Patronengehäuse (7), die Steuerelemente (4,6) und der Innenring (3) bezüglich der Achse (A) konzentrisch zueinander angeordnet sind.

6. Armatur nach einem der Ansprüche 1 bis 5, **dadurch gekennzeichnet, dass** das zweite Auslaufteil (8) drehbar auf den stromabwärts gelegenen Endbereich (14) des Patronengehäuses (7) aufgesetzt ist und mittels einer Fixierschraube (10), die in eine Ausnehmung (17) am stromabwärts gelegenen Endbereich (14) eingreift, am Patronengehäuse (7) gehalten ist.

7. Steuerpatrone zur Regelung des Wasserstroms an einem Wasserauslauf (12) einer Armatur nach einem der Ansprüche 1 bis 6, umfassend ein mit Durchlassbohrungen versehenes, um eine Achse (A) drehbares erstes Steuerelement (4) und ein daran anliegendes, mit Durchlassbohrungen versehenes stationäres zweites Steuerelement (6), wobei das erste Steuerelement (4) und das zweite Steuerelement (6) in einem im Wesentlichen zylindrischen Patronengehäuse (7) angeordnet sind, und die Steuerpatrone weiter ein ringförmig ausgebildetes und radial ausserhalb des Patronengehäuses (7) angeordnetes Betätigungselement (1) und einen radial innerhalb des Patronengehäuses (7) angeordneten Innenring (3) aufweist, wobei das Betätigungselement (1) über eine das Patronengehäuse (7) durchgreifende Verbindung drehfest mit dem Innenring (7) und der Innenring (7) wiederum drehfest mit dem ersten Steuerelement (4) verbunden ist, **dadurch gekennzeichnet,**
**dass** das Patronengehäuse (7) aus einem Stück gefertigt ist, dass das Patronengehäuse (7) ein stromaufwärts gelegenen Endbereich (13) mit in diesem angeordneten Aussengewinde (15) aufweist, wobei das Aussengewinde (15) im Anwendungsfall in einen ersten Auslaufteil (9) des Wasserauslaufs (12) in Form eines zylindrischen Rohres eingeschraubt wird, dass das Patronengehäuse einen stromabwärts gelegenen Endbereich (14) aufweist, auf welchen im Anwendungsfall ein zweites Auslaufteil (8) ebenfalls in Form eines zylindrischen Rohres aufgesetzt und von diesem gehalten wird, dass das Betätigungselement (1) zwischen dem Aussengewinde (15) und dem stromabwärts gelegenen Endbereich (14) angeordnet ist und dass im Anwendungsfall der erste Auslaufteil (9) wie auch der zweite Auslaufteil (8) beim Betätigungselement (1) enden.

8. Steuerpatrone nach Anspruch 7, **dadurch gekennzeichnet, dass** das Patronengehäuse (7) die Steuerelemente (4,6) umschliesst, und als deren alleinige Halterung dient.

9. Steuerpatrone nach Anspruch 7 oder 8, **dadurch gekennzeichnet, dass** das Patronengehäuse (7) im wesentlichen rotationssymmetrisch bezüglich der Achse (A) ist.

10. Steuerpatrone nach einem Ansprüche 7 bis 9, **dadurch gekennzeichnet, dass** das Patronengehäuse (7), die Steuerelemente (4,6) und der Innenring (3) bezüglich der Achse (A) konzentrisch zueinander angeordnet sind.

11. Steuerpatrone nach einem der Ansprüche 7 bis 10, **dadurch gekennzeichnet, dass** das erste Steuerelement (4) und das zweite Steuerelement (6) mit Durchlassbohrungen versehene Ventilscheiben aus Keramik sind.

12. Steuerpatrone nach einem der Ansprüche 7 bis 11, **dadurch gekennzeichnet, dass** das Patronengehäuse (7) in seinem stromabwärts gelegenen Endbereich (14) eine Ausnehmung (17) aufweist, welche eine Fixierschraube (10) aufnehmen kann, mit welcher der zweite Auslaufteil (8) am Patronengehäuse (7) befestigbar ist.

13. Steuerpatrone nach einem der Ansprüche 7 bis 12, **dadurch gekennzeichnet, dass** das zweite Steuerelement (6) wenigstens zwei Durchlassbohrungen aufweist, denen im Anwendungsfall warmes Wasser und kaltes Wasser getrennt zugeführt wird, wobei die Durchlassmenge des warmen beziehungsweise kalten Wassers mit dem ersten Steuerelement (4) regelbar ist und wobei stromabwärts des ersten Steuerelements (4) innerhalb des Patronengehäuses (7) eine Mischkammer (31) angeordnet ist, in der die beiden Komponenten zusammenfliessen und gemischt werden.

14. Steuerpatrone nach einem der Ansprüche 7 bis 13, **dadurch gekennzeichnet, dass** die Steuerpatrone einen Anschluss für warmes Wasser und einen Anschluss für kaltes Wasser aufweist.

## Claims

1. Fitting with a water outlet (12) and with a control cartridge arranged in the water outlet (12), the control cartridge for regulating the water flow having a first control element (4), which is provided with passage holes and is rotatable about an axis (A), and having a stationary, second control element (6), which bears against the first control element and is provided with passage holes, the first control element (4) and the second control element (6) being arranged in a substantially cylindrical cartridge housing (7), and the control cartridge further having an annular actuating element (1), arranged radially outside the cartridge housing (7), and an inner ring (3), arranged radially inside the cartridge housing (7), the actuating element (1) being connected in a rotationally fixed manner to the inner ring (7) by means of a connection reaching through the cartridge housing (7) and the inner ring (7) in turn being connected in a rotationally fixed manner to the first control element (4), the water outlet (12) comprising a first outlet part (9) in the form of a cylindrical pipe and a second outlet part (8), arranged downstream thereof, likewise in the form of a cylindrical pipe, **characterized in that** the cartridge housing (7) is produced from one piece, **in that** the cartridge housing (7) is screwed with an external thread (15), arranged in an upstream end region (13), into the first outlet part (9) and the second outlet part (8) is fitted onto a downstream end region (14) of the cartridge housing and is held by the latter, and **in that** the first outlet part (9) and the second outlet part (8) end at the actuating element (1).

2. Fitting according to Claim 1, **characterized in that** the control cartridge serves as the sole securing means for the second outlet part (8).

3. Fitting according to claim 1 or 2, **characterized in that** the first outlet part (9) in the form of a cylindrical pipe is a straight cylindrical pipe and the second outlet part (8) in the form of a cylindrical pipe is a bent cylindrical pipe.

4. Fitting according to one of Claims 1 to 3,
**characterized in that** the first outlet part (9) comprises a hot water channel (29) and, fluid-dynamically separate from it, a cold water channel (30), the hot water channel (29) and the cold water channel (30) opening out into different passage holes of the second control element (6).

5. Fitting according to one of Claims 1 to 4,
**characterized in that** the cartridge housing (7), the control elements (4, 6) and the inner ring (3) are arranged concentrically in relation to one another with respect to the axis (A).

6. Fitting according to one of Claims 1 to 5,
**characterized in that** the second outlet part (8) is fitted rotatably on the downstream end region (14) of the cartridge housing (7) and is held on the cartridge housing (7) by means of a fixing screw (10), which engages in a recess (17) on the downstream end region (14).

7. Control cartridge for regulating the water flow at a water outlet (12) of a fitting according to one of Claims 1 to 6, comprising a first control element (4), which is provided with passage holes and is rotatable about an axis (A), and comprising a stationary, second control element (6), which bears against the first control element and is provided with passage holes, the first control element (4) and the second control element (6) being arranged in a substantially cylindrical cartridge housing (7), and the control cartridge further having an annular actuating element (1), arranged radially outside the cartridge housing (7), and an inner ring (3), arranged radially inside the cartridge housing (7), the actuating element (1) being connected in a rotationally fixed manner to the inner ring (7) by means of a connection reaching through the cartridge housing (7) and the inner ring (7) in turn being connected in a rotationally fixed manner to the first control element (4), **characterized in that** the cartridge housing (7) is produced from one piece, **in that** the cartridge housing (7) has an upstream end region (13) with an external thread (15) arranged in the latter, the external thread (15) being screwed when in use into a first outlet part (9) of the water outlet (12) in the form of a cylindrical pipe, **in that** the cartridge housing has a downstream end region (14), onto which a second outlet part (8), likewise in the form of a cylindrical pipe, is fitted when in use and is held by the said end region, **in that** the actuating element (1) is arranged between the external thread (15) and the downstream end region (14) and **in that**, when in use, the first outlet part (9) and the second outlet part (8) end at the actuating element (1).

8. Control cartridge according to Claim 7, **characterized in that** the cartridge housing (7) encloses the control elements (4, 6), and serves as their sole securing means.

9. Control cartridge according to Claim 7 or 8, **characterized in that** the cartridge housing (7) is substantially rotationally symmetrical with respect to the axis (A).

10. Control cartridge according to one of Claims 7 to 9, **characterized in that** the cartridge housing (7), the control elements (4, 6) and the inner ring (3) are arranged concentrically in relation to one another with respect to the axis (A).

11. Control cartridge according to one of Claims 7 to 10, **characterized in that** the first control element (4) and the second control element (6) are ceramic valve discs provided with passage holes.

12. Control cartridge according to one of Claims 7 to 11, **characterized in that** the cartridge housing (7) has in its downstream end region (14) a recess (17) which can receive a fixing screw (10) with which the second outlet part (8) can be fastened to the cartridge housing (7).

13. Control cartridge according to one of Claims 7 to 12, **characterized in that** the second control element (6) has at least two passage holes, to which, when in use, hot water and cold water are separately supplied, it being possible for the amount of hot or cold water passing through to be regulated by the first control element (4) and a mixing chamber (31) being arranged downstream of the first control element (4) within the cartridge housing (7), in which chamber the two components flow together and are mixed.

14. Control cartridge according to one of Claims 7 to 13, **characterized in that** the control cartridge has a connection for hot water and a connection for cold water.

## Revendications

1. Robinetterie sanitaire comprenant une sortie d'eau (12) et une cartouche de réglage disposée dans la sortie d'eau (12), la cartouche de réglage présentant, pour régler l'écoulement d'eau, un premier élément de réglage (4) muni de trous de passage et pouvant tourner autour d'un axe (A), et un second élément de réglage stationnaire (6) s'appliquant sur ce dernier et muni de trous de passage, le premier élément de réglage (4) et le second élément de réglage (6) étant disposés dans un corps de cartouche (7) essentiellement cylindrique, et la cartouche de réglage présentant en outre un élément d'actionnement (1) réalisé en forme d'anneau et disposé radialement à l'extérieur du corps de cartouche (7) et une bague intérieure (3) disposée radialement à l'intérieur du corps de cartouche (7), l'élément d'actionnement (1) étant assemblé de façon solidaire avec la bague intérieure (3) par l'intermédiaire d'un assemblage qui traverse le corps de cartouche (7) et la bague intérieure (3) étant assemblée pour sa part de façon solidaire avec le premier élément de réglage (4), la sortie d'eau (12) comprenant une première partie de sortie (9) en forme d'un tube cylindrique et une seconde partie de sortie (8), disposée en aval de cette dernière, également en forme d'un tube cylindrique, **caractérisée en ce que** le corps de cartouche (7) est fabriqué d'une pièce, que le corps de cartouche (7) est vissé dans la première partie de sortie d'eau (9) par un filetage extérieur (15) disposé dans une zone extrême (13) placée en amont et la seconde partie de sortie d'eau (8) est mise en place sur une zone extrême (14), placée en aval, du corps de cartouche et est maintenue par cette dernière, et que la première partie de sortie d'eau (9), comme la seconde partie de sortie d'eau (8), s'achèvent sur l'élément d'actionnement (1).

2. Robinetterie sanitaire suivant la revendication 1, **caractérisée en ce que** la cartouche de réglage sert de fixation unique pour la seconde partie de sortie d'eau (8).

3. Robinetterie sanitaire suivant l'une des revendications 1 et 2, **caractérisée en ce que** la première partie de sortie d'eau (9), en forme d'un tube cylindrique, est un tube cylindrique s'étendant linéairement, et la seconde partie de sortie d'eau (8), en forme d'un tube cylindrique, est un tube cylindrique cintré.

4. Robinetterie sanitaire suivant l'une des revendications 1 à 3, **caractérisée en ce que** la première partie de sortie d'eau (9) comprend un conduit d'eau chaude (29) et un conduit d'eau froide (30) séparé de ce dernier au plan de la dynamique des fluides, le conduit d'eau chaude (29) et le conduit d'eau froide (30) débouchant dans des trous de passage différents du second élément de réglage (6).

5. Robinetterie sanitaire suivant l'une des revendications 1 à 4, **caractérisée en ce que** le corps de cartouche (7), les éléments de réglage (4, 6) et la bague intérieure (3) sont disposés concentriquement entre eux par rapport à l'axe (A).

6. Robinetterie sanitaire suivant l'une des revendications 1 à 5, **caractérisée en ce que** la seconde partie de sortie d'eau (8) est mise en place avec une possibilité de rotation sur la zone extrême (14), placée en aval, du corps de cartouche (7) et est maintenue sur le corps (7) au moyen d'une vis de fixation (10), qui s'engage dans un creux (17) sur la zone extrême (14) placée en aval.

7. Cartouche de réglage pour régler l'écoulement d'eau sur une sortie d'eau (12) d'une robinetterie sanitaire suivant l'une des revendications 1 à 6, comprenant un premier élément de réglage (4) muni de trous de passage et pouvant tourner autour d'un axe (A) et un second élément de réglage stationnaire (6) s'appliquant sur ce dernier et muni de trous de passage, le premier élément de réglage (4) et le second élément de réglage (6) étant disposés dans un corps de cartouche (7) essentiellement cylindrique, et la cartouche de réglage présentant en outre un élément d'actionnement (1) réalisé en forme d'anneau et disposé radialement à l'extérieur du corps de cartouche (7) et une bague intérieure (3) disposée radialement à l'intérieur du corps de cartouche (7), l'élément d'actionnement (1) étant assemblé de façon solidaire avec la bague intérieure (3) par l'intermédiaire d'un assemblage qui traverse le corps de cartouche (7) et la bague intérieure (3) étant assemblée pour sa part de façon solidaire avec le premier élément de réglage (4), **caractérisée en ce que** le corps de cartouche (7) est fabriqué d'une pièce, que le corps de cartouche (7) présente une zone extrême (13) placée en amont avec un filetage extérieur (15) disposé dans cette dernière, le filetage extérieur (15) étant vissé dans le cas d'application dans une première partie (9) de la sortie d'eau (12) en forme d'un tube cylindrique, que le corps de cartouche présente une zone extrême (14) placée en aval sur laquelle est mise en place, dans le cas d'application, une seconde partie de sortie d'eau (8) également en forme d'un tube cylindrique et est maintenue par cette dernière, que l'élément d'actionnement (1) est disposé entre le filetage extérieur (15) et la zone extrême (14) placée en aval et que, dans le cas d'application, la première partie de sortie d'eau (9), comme la seconde partie de sortie d'eau (8), s'achèvent sur l'élément d'actionnement (1).

8. Cartouche de réglage suivant la revendication 7, **caractérisée en ce que** le corps de cartouche (7) entoure les éléments de réglage (4, 6) et sert de fixation unique pour ces derniers.

9. Cartouche de réglage suivant l'une des revendications 7 et 8, **caractérisée en ce que** le corps de cartouche (7) est essentiellement à symétrie de révolution par rapport à l'axe (A).

10. Cartouche de réglage suivant l'une des revendications 7 à 9, **caractérisée en ce que** le corps de cartouche (7), les éléments de réglage (4, 6) et la bague intérieure (3) sont disposés concentriquement entre eux par rapport à l'axe (A).

11. Cartouche de réglage suivant l'une des revendications 7 à 10, **caractérisée en ce que** le premier élément de réglage (4) et le second élément de réglage (6) sont des disques de soupape en céramique munis de trous de passage.

12. Cartouche de réglage suivant l'une des revendications 7 à 11, **caractérisée en ce que** le corps de cartouche (7) présente, dans sa zone extrême (14) placée en aval, un creux (17) qui peut recevoir une vis de fixation (10) par laquelle la seconde partie de sortie d'eau (8) peut être fixée sur le corps de cartouche (7).

13. Cartouche de réglage suivant l'une des revendications 7 à 12, **caractérisée en ce que** le second élément de réglage (6) présente au moins deux trous de passage qui sont alimentés séparément en eau chaude et en eau froide dans le cas d'application, le débit de passage de l'eau chaude ou froide pouvant être réglé à l'aide du premier élément de réglage (4) et un compartiment de mélange (31), dans lequel s'écoulent et sont mélangés les deux composants, étant disposé en aval du premier élément de réglage (4) à l'intérieur du corps de cartouche (7).

14. Cartouche de réglage suivant l'une des revendications 7 à 13, **caractérisée en ce que** la cartouche de réglage présente un raccord pour l'eau chaude et un raccord pour l'eau froide.
